(19) **Europäisches Patentamt**
**European Patent Office**
**Office européen des brevets**

(11) **EP 2 105 881 A1**

(12) **EUROPEAN PATENT APPLICATION**

(43) Date of publication:
**30.09.2009 Bulletin 2009/40**

(51) Int Cl.:
**G06T 5/50** (2006.01)　　　**G06T 7/20** (2006.01)

(21) Application number: **08005483.6**

(22) Date of filing: **25.03.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Panasonic Corporation**<br>**Kadoma-shi**<br>**Osaka 571-8501 (JP)** | (72) Inventors:<br>• **Palfner, Torsten, Dr.**<br>**63225 Langen (DE)**<br>• **Wedi, Thomas, Dr.**<br>**63225 Langen (DE)**<br><br>(74) Representative: **Grünecker, Kinkeldey,**<br>**Stockmair & Schwanhäusser**<br>**Anwaltssozietät**<br>**Leopoldstrasse 4**<br>**80802 München (DE)** |

(54) **Fast reference frame selection for reconstruction of a high-resolution frame from low-resolution frames**

(57)　　The present invention relates to the field of reconstructing a high-resolution frame from a sequence of low-resolution frames containing a target frame and at least one reference frame. In order to reduce the search space of a reconstruction algorithm and thus decrease its complexity, redundant reference frames are prevented from being used for the reconstruction. The redundancy is determined based on motion estimation between the target frame and a reference frame.

## Fig. 2

**Description**

The present invention relates to the reconstruction of a high-resolution frame from a plurality of low-resolution frames with reduced computational complexity, and a corresponding apparatus.

BACKGROUND OF THE INVENTION

A sequence of low-resolution frames can be derived from a full-resolution image (frame) by subdividing the samples of the full-resolution frame to two or more groups of samples forming the subsampled low-resolution frames. In such case, two or more low-resolution frames correspond to one full-resolution frame taken at one time. The temporal resolution of such low-resolution sequence thus corresponds to the temporal resolution of the high-resolution frames. Therefore, the reconstruction of the full-resolution frame is a straight forward combining of the two or more low-resolution frames. The combining consists of the following steps. A so called "target frame" is chosen from the low-resolution frames, it may be the first or any other low-resolution frame from a sequence of low-resolution frames belonging to one full-resolution frame. The target frame is aligned to a full-resolution grid. The unknown positions of the full-resolution frame samples in the grid are then filled out by the remaining low-resolution frames, called "reference frames", belonging to the same full-resolution image.

The low-resolution frame sequences consisting of subdivided full-resolution frames are used for instance in systems where interlaced video input is required and where the displayed sequence was taken in a progressive (non-interlaced) manner. Here, the low-resolution frames, called fields, are formed alternately by odd and even lines of the full-resolution frame. Another example for such low-resolution sequences is the multiple description coding used for robust transmission in an error-prone environment: if one of the low-resolution frames get lost, the remaining low-resolution frame(s) belonging to the same full-resolution frame can still be used for its reconstruction using interpolation. Here, the low-resolution frames may be formed in an arbitrary way, for instance by alternately skipping lines like in case of interlacing, or by using a chessboard like sample distribution, or by any other way, preferably a way suitable for the reconstruction by interpolation.

Another approach for forming the sequence of low-resolution frames is taking different low-resolution exposures of the same scene not only in space but also in time by capturing low-resolution frames with different sample positions at different time. When displaying, a high-resolution frame is reconstructed from a plurality of said low-resolution frames. The reconstruction process fuses several low-resolution exposures of the same scene in the high-resolution frame. Such methods are commonly referred to as multi-frame super-resolution reconstruction or multi-frame super-resolution interpolation in contrast to the single-frame image reconstruction problem, where only a single input image is available. The simple combining of images is in general not possible any more, since there may be movement between the low-resolution images and thus their combining can result in annoying artifacts. On the other hand, obtaining a high-resolution frame from a sequence of low-resolution frames captured at different time can take advantage of the additional spatiotemporal information available in the low-resolution frame sequence. In particular, camera and scene motion lead to frames in the video sequence containing similar, but not identical information which facilitates reconstruction of a high-resolution frame having possibly wider bandwidth than any of the individual low-resolution frames.

Currently, high-resolution images are required in most electronic imaging applications. On the one hand, increasing spatial resolution results in better quality of images and video sequences. On the other hand, acquisition, processing, possible transmission, and displaying of high-resolution still images or images (frames) of a video sequence require costly high-performance imaging devices. As a way to cut down hardware expenses, super-resolution methods for converting a sequence of blurred, noisy low-resolution frames into a higher-resolution frame or sequence have recently attracted considerable interest among computer scientists and image processing specialists.

The basic idea behind super-resolution image reconstruction is to exploit sub-pixel movements of image components within the sequence of low-resolution frames to reconstruct image details that are not apparent from any of these frames by itself. Now, the reconstruction process is not any more based on a predefined number of low-resolution frames that together combine into one full-resolution frame. Each low-resolution frame captures different state of a scene, each low-resolution frame may serve as a target frame. The reconstructed frame is here called a "high-resolution frame" rather than a "full-resolution frame", since it is not necessarily possible to reconstruct the full-resolution frame that has never been entirely captured - the low resolution frames were taken at different time. A high-resolution frame may be obtained by using an arbitrary number of reference frames. Thus, one low-resolution frame may serve as both a target frame and a reference frame for another target frame. First, the grid of a high-resolution frame is filled with all samples of the target frame. Then, the remaining samples in the grid are obtained using one or more low-resolution reference frames available at the time of reconstruction. A first step in a reconstructing algorithm consists typically of determining the displacement of samples in a target frame relative to one or more reference frames. This displacement is employed in a second step to align the low-resolution reference frame samples on a high-resolution grid derived from the target frame. A high-resolution frame may be reconstructed from the aligned low-resolution frames by means of, for instance, non-uniform interpolation techniques. Finally, de-blurring and de-noising filters may be applied in a restoration step to generate the high-resolution image.

The quality of reconstruction depends thus on the availability of the suitable reference frame samples that can be aligned to the high-resolution grid so that they fill out empty positions. The more reference frames available, the higher the probability of finding such suitable samples. However, finding best samples for reconstruction of the high-resolution frame derived from the target frame using a plurality of reference frames is a computationally complex task that requires considerable computation time. Therefore, in particular for deployment in real-time systems, a tradeoff has to be made between the quality of reconstruction and the resulting computational complexity.

SUMMARY OF THE INVENTION

The aim of the present invention is to overcome the above mentioned problems and to provide a method and an apparatus for accurately reconstructing high-resolution frames from a plurality of low-resolution frames with reduced complexity.

This is achieved by the features as set forth in the independent claims.

Preferred embodiments are the subject matter of the dependent claims.

It is the particular approach of the present invention to pre-select from available low-resolution reference frames for a specified target frame such reference frames that are suitable for reconstruction, i.e., contain new information. This is achieved by discarding redundant reference frames which do not provide additional information for the reconstruction. The redundancy is determined based on motion estimation between the target frame and a reference frame. Using the motion estimation enables to determine as redundant also the shifted samples, which in turn results in determining more reference frames redundant. This helps to greatly reduce the number of reference frames for reconstruction in comparison to the case where no motion estimation is employed.

Reducing the number of reference frames used for reconstruction results in lower computational complexity of the reconstruction algorithm and allows the computation time to be reduced. Moreover, discarding redundant reference frames does not lessen the reconstruction quality. In contrast, it allows the most appropriate reference frames to be chosen, e.g., by applying the pre-selection to a higher number of available reference frames.

According to a first aspect of the present invention a method for reconstructing a high-resolution frame from at least one low-resolution reference frames and a target frame, is provided. The method determines whether a reference frame is redundant for reconstruction of the high-resolution frame. The determination is based on motion estimation between the target frame and the reference frame. In accordance with the determination result, a redundant frame is prevented from being used as a reference frame for reconstruction. The high-resolution frame is reconstructed using the target frame and at least one reference frame not being redundant.

According to a further aspect of the present invention, an apparatus is provided for reconstructing a high-resolution frame from a sequence of low-resolution frames including a target frame and at least one reference frame. The apparatus comprises a judging unit, a disabling unit, and a processing unit. The judging unit determines whether a reference frame is redundant for reconstruction of the high-resolution frame based on motion estimation between the target frame and the reference frame. The disabling unit discards a redundant frame from being used by the processing unit as a reference frame for reconstruction.

Preferably, the determining whether a reference frame is redundant is based on the similarity between the target frame and the reference frame, taking the estimated motion into account.

Preferably, the target frame is divided into a plurality of blocks, each block consists of a plurality of pixels and the motion estimation is performed block-wise. First, a block of the target frame is shifted and compared, e.g., pixel per pixel, to the content of the reference frame. A best matching block in the reference frame is then the block at the shifted position that yields the highest similarity with the target frame block.

Preferably, motion is estimated for each block of the target frame. This provides a more exact estimation if the motion vector field is not constant over the frame. However, the present invention is also applicable if the motion is estimated for selected blocks of the target frame only which, on the other hand, reduces the computational complexity and still provides an overall trend if a reference frame contains new information or if it is redundant for reconstruction.

Furthermore, the similarity of the target frame blocks to the corresponding blocks in the reference frame is determined taking into account the estimated motion. Especially, the similarity is determined between a target frame block and its best match in the reference frame, found by motion estimation. Based on similarities of the target frame blocks to the corresponding blocks in the reference frame, finally, the similarity between the target frame and the reference frame is calculated. This can be performed, for instance by summing up or averaging the block similarities, by counting number of blocks with similarity exceeding certain threshold, by any norm of the block similarities, or in any other way.

Preferably, the target frame is divided into a plurality of target frame areas and the reconstruction step is performed for different target frame areas individually. Correspondingly, the determination and discarding steps may be performed for said different target frame areas individually. In this manner, only locally redundant information in the reference frame is ignored and not the whole reference frame. The present invention is also applicable if the determination and discarding steps are performed for the whole target frame with respect to a reference frame, and based, e.g., on the overall motion estimated for either all or only selected blocks of the target frame. The target frame area may have a form of a block. It can have any other sizes and shapes, for instance, it may correspond to an object in the frame, or to an arbitrarily shaped group of blocks for motion estimation.

In particular, the areas of the target frame may correspond to the blocks for motion estimation. This provides the highest local adaptability of the reference frame pre-selection.

Preferably, a reference frame is considered redundant if its similarity to the target frame exceeds a predefined threshold $T_L$. This threshold may be fixed or adaptive, it may depend on for instance the content of the sequence of frames, degree of subsampling, frame rate, or any other parameters.

Preferably, a reference frame is prevented from being used as a reference frame for reconstruction if the similarity is lower than a predefined threshold $T_U$. This avoids using regions where no match exists for reconstruction. Again, the threshold may be fixed or adaptive, it may depend on for instance the content of the sequence of frames, degree of subsampling, frame rate, or any other parameters.

Preferably, a best reference frame for reconstruction of the high-resolution frame using particular target frame is selected from the reference frames that have not been determined redundant. The best reference frame has the lowest similarity to the target frame. Selecting one single best reference frame reduces the computational complexity of the reconstruction algorithm. It is particularly advantageous, if subsampling factor of the low-resolution sequence is equal 2. In such case, even with only one reference frame, it is theoretically possible to reconstruct the full-resolution frame perfectly. This happens only if the target frame and the reference frame contain disjoint samples.

Selecting N frames for reconstruction is further possible by cascading the selection of the single best reference frame. After having the best reference frame, a next best reference frame can be selected from the reference frames that have not been determined redundant and have not been selected best reference frame or next best reference frame. The next best reference frame is then the one having the lowest similarity to the previously selected next best reference frame or to the best reference frame.

Preferably, the N best reference frames are found such that they maximize the overall similarity between the target frame and reference frames and the mutual similarity among the reference frames.

Preferably, the motion estimation is performed with a sub-pixel precision in the direction where no aliasing exists. Sub-pixel positions in the direction where aliasing exists may result in false matches and consequently, to the selection of wrong reference frames for reconstruction.

Preferably, the sequence of low-resolution frames is a line-skipped sequence of fields. Each field of the line-skipped sequence has a vertical resolution that is K-fold lower than the vertical resolution of the full-resolution frames, K is an integer larger than 1.

In particular, K may equal 2 so that the line-skipped sequence of fields represents an interlaced video signal. However, the present invention is also applicable to general line-skipped sequences, wherein K is an integer larger than 2, in particular equal to 3.

The above and other objects and features of the present invention will become more apparent from the following description and preferred embodiments given in conjunction with the accompanying drawings, in which:

Fig. 1    is a block diagram illustrating the general idea of reconstructing a high-resolution frame using a target frame and reference frames in accordance with the present invention;

Fig. 2    is a block diagram illustrating the details of reference frame pre-selection in accordance with an embodiment of the present invention;

Fig. 3a    is a schematic drawing showing a segmentation of the target frame into blocks used for motion estimation algorithm;

Fig. 3b    is a schematic drawing showing examples of the relation between a target frame area and the blocks used for motion estimation algorithm;

Fig. 4    is a schematic drawing illustrating a conventional block-based motion estimation;

Fig. 5    is a block diagram showing the details of pre-selection of a best frame for reconstruction in accordance with another embodiment of the present invention;

Fig. 6a    is a schematic drawing illustrating the line-skipping operation with K=2;

Fig. 6b    is a schematic drawing illustrating the line-skipping operation with K=3;

Fig. 7    is a schematic drawing illustrating an example of de-interlacing a line-skipped sequence with K = 3 by means of a block-based line mixing algorithm;

Fig. 8    is a block diagram illustrating an example of preselecting two best reference frames for reconstruction in accordance with yet another embodiment of the present invention; and

Fig. 9   is a block diagram showing the cascading of the best reference frame selecting in accordance with yet another embodiment of the present invention.

DETAILED DESCRIPTION

The present invention relates to a reconstruction of a high-resolution frame from a plurality of low-resolution frames with reduced computational complexity. This high resolution frame may be a single still image or a frame of a video sequence. Especially in systems where the low-resolution frames are captured at different time, the reconstruction of a high-resolution frame is a rather complex task due to the possible presence of motion between them. On the other hand, motion can be utilized to recover the details that are not contained in the separate low-resolution frames. A reconstruction process may estimate and compensate the motion, and used the resulting samples for reconstruction of the high-resolution frame, which may be in more than one reference frames. The quality of reconstruction depends on degree of filling the grid of the high-resolution frame with samples containing details that are not present in the individual low-resolution frames.

Hence, the quality of the reconstructed high-resolution frame depends substantially on the availability of the such suitable reference frame samples containing new information. With increasing number of available reference frames, the likelihood of having suitable reference samples increases. Therefore, in order to achieve the desired quality of reconstruction, the number of low-resolution reference frames used by the reconstruction algorithm has to be sufficiently high. However, exploiting a higher amount of reference frames increases the computational complexity of the reconstruction algorithm, making longer computation times necessary.

Typically, the well-performing reconstruction algorithms are based on solving rather complex optimization problems and increasing the number of reference frames may cause the task to be unfeasible for the real-time systems. Moreover, although increasing the number of reference frames in general increases the likelihood of available new information, this is not necessarily the case for all individual reference frames. Depending on the content of the low-resolution frame sequence, there may be reference frames that do not contain any new information. In such cases, utilizing them for reconstruction does not improve the quality of the resulting high-resolution image but instead increases the complexity of the restoration process.

The present invention is based on the fact that when reconstructing high-resolution frames out of a target frame and at least one reference frame, redundant reference frames only increase the computational complexity of the employed reconstruction algorithm and do not contribute to the quality of the reconstruction. Regarding the reconstruction of a high-resolution frame from a plurality of low-resolution frames, the low-resolution frames are redundant if they contain the same samples as other low-resolution reference frames or the target frame. Therefore, the temporally adjacent low-resolution frames are typically sampled at different spatial positions in order to provide independent samples for reconstruction of the non-moving objects. The sampling pattern (sequence of different frame sampling positions) is then repeated in time. A plausible example for redundant samples are samples of an image area without motion taken at the same spatial positions at different times. Obviously, such samples do not contain new information and therefore cannot contribute to the quality of reconstruction. Moreover, the same samples of the same area only spatially shifted do not contain new information that could be used for reconstruction.

It is the particular approach of the present invention to consider such shifted samples redundant and not to use them for reconstruction. Only the non-redundant samples containing new information are used for the reconstruction.

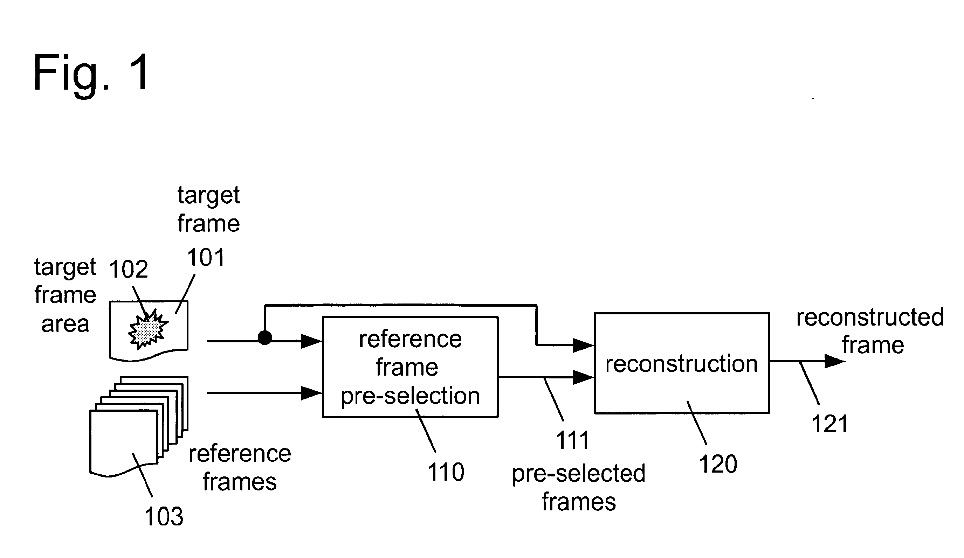

Figure 1 illustrates the general idea of the present invention. In accordance therewith, reconstruction 120 of a the high-resolution frame 121 is performed using a target frame 101 and an at least one reference frame 111. The reference frame/frames 111 used for reconstruction is/are pre-selected from available reference frames 103. The available reference frames are for example the received frames in case of a transmission system performing the reconstruction at the receiver, or the frames read from a storage and possibly buffered. The pre-selection 110 of the reference frames is performed to reduce the number of reference frames used for reconstruction by selecting those containing samples suitable for reconstruction of the high-resolution frame. Preventing the redundant frames from being used as reference frames for reconstruction does not lessen the quality, but reduces the computational complexity of the reconstruction algorithm.

In accordance with an embodiment of the present invention, the target frame 101 comprises a target frame area 102 consisting of a plurality of pixels. The target frame may comprise more than one target frame area that may be either disjoint or overlapping. Then, the pre-selection 110 is performed for different target frame areas individually, i.e., the frames used for reconstruction of different target frame areas may differ. The target frame area may for example have a form of a block of pixels, the size of the block may be chosen to comply with the block structure used by another deployed algorithms, for example by a motion estimation. The target frame area may also consist of more blocks. Moreover, the size and the shape of a target frame area can be chosen for instance to correspond to shape and size of an object in the target frame, or to correspond to a part of the target frame with uniform movement.

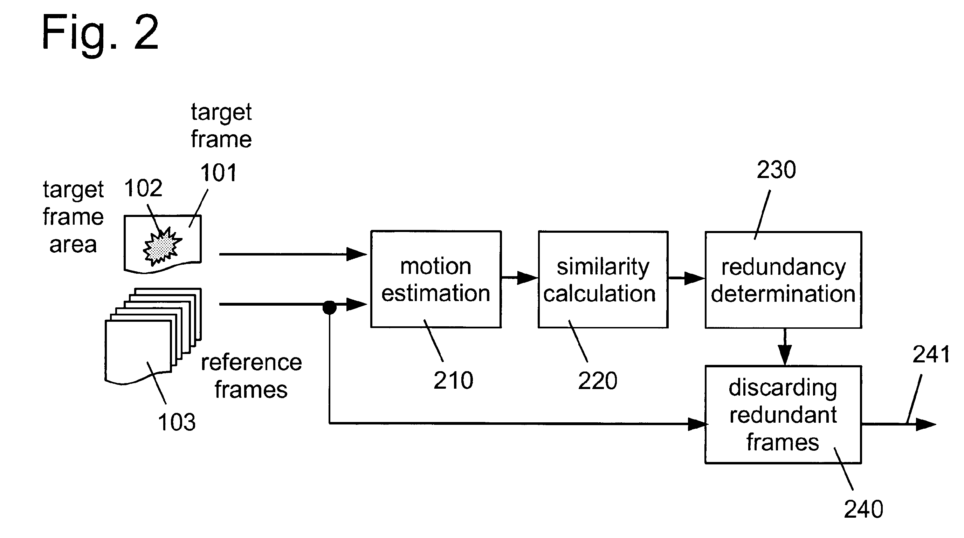

Figure 2 shows an example realization of pre-selecting the reference frames for reconstruction according to the present invention. The available reference frames 103 are examined whether they are or not redundant for reconstruction of the target frame area 102 in the target frame 101. For each available reference frame 103 first the motion estimation 210 is performed in order to estimate motion between the target frame area 102 and the part of the reference frame corresponding to the best match of the target frame area. Then, a similarity is determined between the target frame area 102 and the part of the reference frame corresponding to the best match of the target frame area. Based on the calculated similarity 220, the redundancy 230 of the reference frame is determined or not. If the reference frame is determined redundant, it is discarded 240, i.e., it is not selected for the reconstruction of the target frame area 102. After examining the available reference frames, a reduced number of reference frames 241 remains, that is pre-selected for the reconstruction 120 of the target frame area 102. The reference frames determined in such way are an example of the pre-selected frames 111.

In accordance with another embodiment of the present invention, the motion estimation is performed block-wise, i.e., the target frame is segmented into blocks for which a motion estimation 210 is performed as conventionally used for example in video coding. Obviously, motion estimation may be performed for image areas having various sizes and shapes, it may be equal to the target frame area, it may take the shape of objects in the present image or any other shape and size.

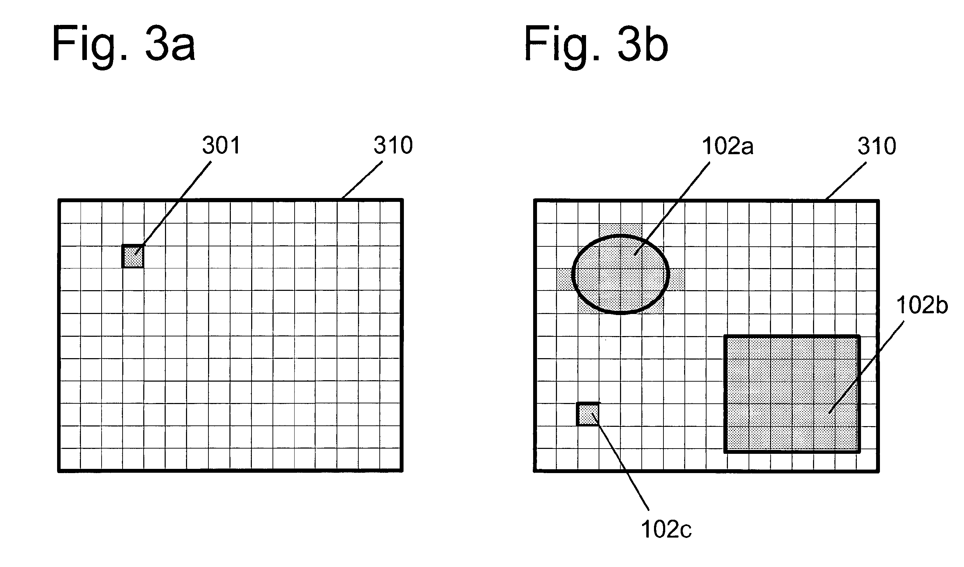

Figure 3a provides an example of segmenting a target frame 310 into blocks 301 for motion estimation. The shape of blocks may be rectangular or square. The sizes of blocks for motion estimation typically used by video encoders are for example 16x16, 8x8, 4x4, 16x8, 8x16, etc. These sizes as well as other sizes of blocks for motion estimation can be used with the present invention. Here, the choice of the block size can be fixed or adaptive to the content of the frame sequence.

Figure 3b illustrates an example of relation between blocks for motion estimation and the target frame area. In general, a target frame area (102) may be composed of one (102c) or more (102a, 102b) blocks (301) for motion estimation. The target frame area may have a form of a block 102b or any other form. It may be (102a), but need not to be entirely covered by the blocks for motion estimation.

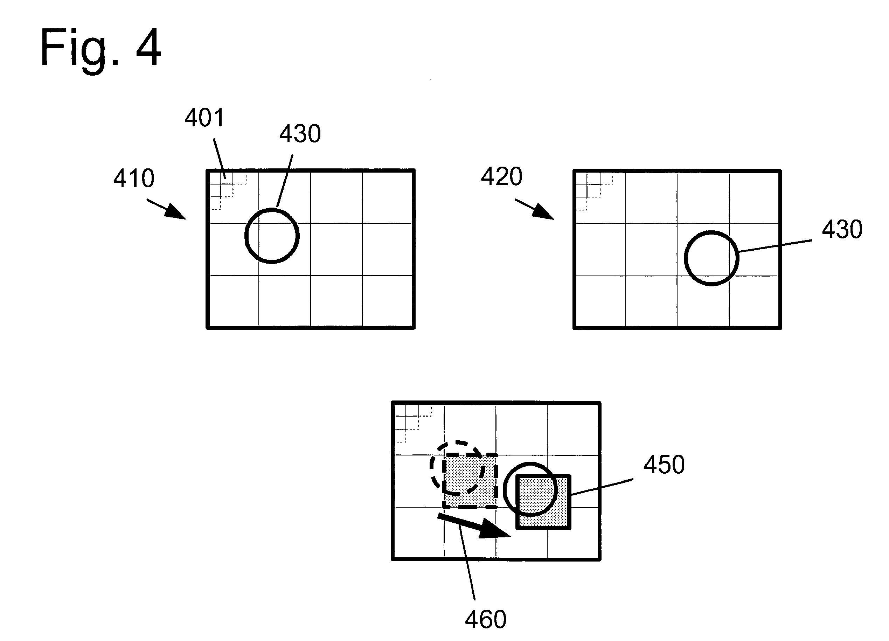

In Figure 4, conventional block-based motion estimation is illustrated. An object 430 in a current frame 420 has moved relative to a previous frame 410. In order to determine the corresponding motion vector, each frame is divided into a plurality of blocks, each block consisting of a plurality of pixels 401. A block 450 of the previous frame is shifted and compared pixel by pixel to the content of the current frame. In order to quantify the match, a similarity measure is used that is preferably based on the sum of absolute pixel-wise differences. The sum of absolute differences (SAD) is in fact a measure of dissimilarity: the higher the similarity, the lower the SAD. Other similarity and dissimilarity measures may equally be employed, such as mean square error, various optionally weighted norms, correlation coefficients or any other measure expressing the level of similarity between the compared blocks. The shifted position that yields the best match with the current frame is then used to define a motion vector 460 for this block, the motion vector expressing the amount and the direction of movement of the examined block.

After performing motion estimation 210, similarity calculation 220 is performed. This may be in particular simple in the case where the target frame area 102 corresponds to a block used for motion estimation and if the same similarity measure as for motion estimation is applied. In such case, the similarity has already been calculated for motion estimation; it is the similarity between the target frame block and its best match in the reference frame. In any other cases, the similarity of the target frame area to its best matching parts of the reference frame may be advantageously determined based on similarities of the blocks contained in the target frame area for which the motion estimation has been performed. For instance, if sum of absolute differences is used for motion estimation, the similarity of the target area to the best matching parts in the reference frames may be calculated by summing up all the SAD values of best matching blocks used for motion estimation contained in the target frame area. Such similarity calculation has the advantage of low computational complexity. The similarity between the target frame area and the reference frame area may be also calculated as a number of blocks in such area exceeding a predefined threshold, or by using arbitrary norm of similarities of the target frame blocks. Obviously, other methods and measures for calculating the similarity may be used instead.

The motion estimation may be performed for all blocks of the target frame. This provides most exact estimation of movement, and consequently, allows most reliable determination of redundant reference frames for the particular target frame area. For some applications, however, it may be desirable to perform motion estimation for some selected blocks only. It reduces the complexity even more and still allows to estimate the trend of motion for different parts of the frame. According to another embodiment of the present invention, the redundant frames may be determined only once per target frame, i.e., the target frame area corresponds to the whole target frame. This greatly reduces the complexity of the pre-selection, but lacks the local adaptability and thus, is prevailingly suitable for video sequences with mostly uniform movement. The motion estimation here may be advantageously performed only for the selected blocks of the target frame rather than for the whole frame. If the movement in the sequence is mostly uniform, further reduction of complexity may be achieved and still the overall motion trend can be determined.

The redundancy determination 230 is performed based on the output of the similarity calculation 220 - a value of applied similarity measure. If similarity between the target frame and a reference frame is very high, the reference frame is considered to be redundant for reconstruction. In particular, a reference frame is considered redundant if the similarity measured by similarity measure exceeds a certain threshold $T_L$. For instance, if sum of absolute differences (SAD) is used indicating the dissimilarity, then the reference frames with $SAD_1$ below a certain threshold $t_L$ are considered redundant.

In order to prevent the selection of a reference frame where no match exists, in 230 also a frame can be determined redundant for reconstruction of the target frame area 102, having the similarity measured by a similarity measure lower than a certain threshold $T_U$. Correspondingly, the reference frame with sum of absolute differences $SAD_1$ exceeding a certain threshold $t_U$ is prevented from being used for reconstruction. Using such frames for reconstruction may result in annoying artifacts as the reconstruction algorithm tries to combine mismatching frame areas.

Finally, after performing the motion estimation 210, similarity calculation 220, and redundancy determination 230, the frames determined as redundant are discarded 240. The remaining reduced set of reference frames 241 thus satisfies the condition

$$t_L < SAD_1 < t_U.$$

Reference frames satisfying this condition are assumed to be suitable for the reconstruction 120 of the target frame area since they contain a matching area with similarity exceeding a lower threshold (corresponding to the upper threshold for dissimilarity measured by sum of absolute differences $SAD_1 < t_U$), and this area still contains new information since its similarity is lower than an upper threshold (corresponding to the lower threshold for dissimilarity $t_L < SAD_1$).

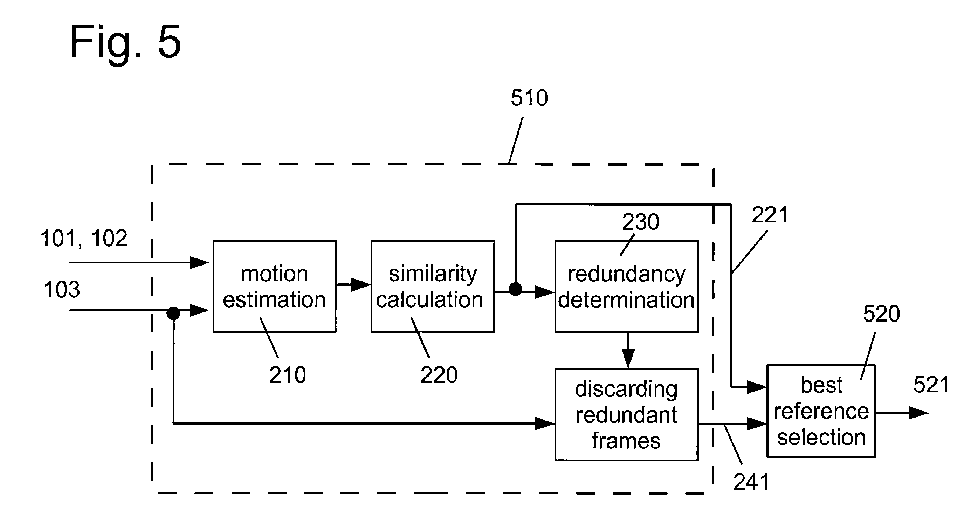

Figure 5 shows another example of pre-selecting the reference frames for reconstruction in accordance with yet another embodiment of the present invention. After performing motion estimation 210, similarity calculation 220, redundancy determination 230, and discarding redundant reference frames 240, the so obtained reduced number of reference frames 241 (delimited by dashed frame 510) is further reduced. From the reference frames 241, a single best reference frame 521 is selected. The best reference frame should contain possibly most new information that can be used for reconstruction of the target frame area. Therefore, the best reference selection 520 chooses from the reduced set of reference frames 241 the frame 521 with minimum similarity 221, corresponding to maximum sum of absolute differences:

$$\max(SAD_1); \quad t_L < SAD_1 < t_U.$$

Selecting one best reference frame is especially suitable if subsampling factor equals 2, since then in an ideal case, where the samples of reference frame area can fill all empty positions of the target frame area in the high-resolution grid, the target frame area in high-resolution frame might be fully reconstructed. For greater subsampling factors, the information from only one low-resolution frame would not be sufficient for the full reconstruction of the high-resolution frame.

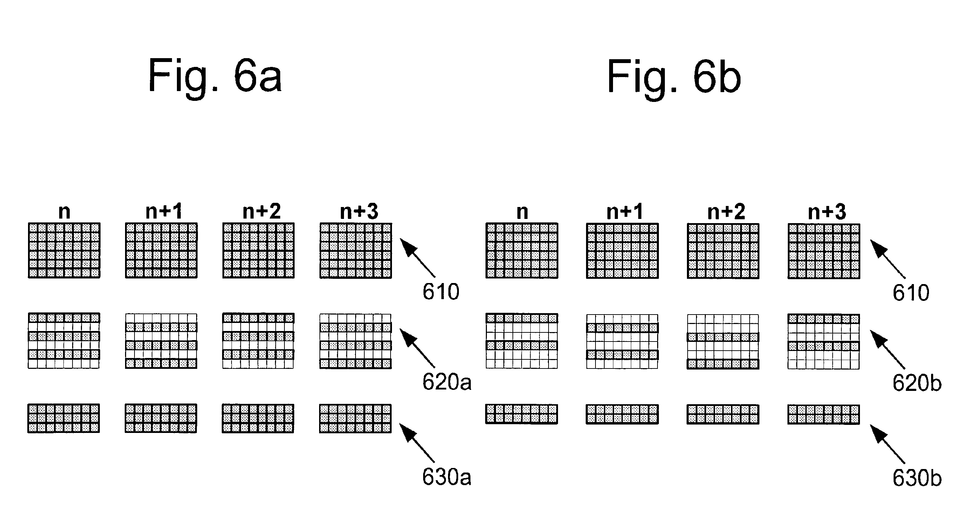

In accordance with yet another embodiment of the present invention, the low resolution sequence is a so called "line-skipped sequence". A line-skipped sequence is obtained by a line skipping operation. The line-skipping operation may keep only every $K^{th}$ line of each frame and discard the other (K-1) lines. Figure 6a and Figure 6b illustrate line-skipping for K = 2 and K = 3, respectively. To guarantee that non-moving objects of a scene are sampled uniformly over time, downsampling depends on the frame number, i.e. after downsampling K consecutive frames 610 of a full-resolution sequence, all pixels of a frame are sampled once (cf. 620a, 620b). The result of this line-skipping operation is a sequence 630a or 630b, which has a much lower resolution in the vertical direction than in the horizontal direction. This means that frames 610 of size R x C are reduced to frames 630a, 630b of size U x C, U = R / K. These frames have a K-fold lower resolution in the vertical direction than in the horizontal direction.

The line skipped-sequence with K = 2, results in a conventional interlaced sequence with two alternating frame samplings 620a. In order to ensure that stationary objects of a scene are uniformly sampled over time, odd and even lines of consecutive frames are skipped alternately. Such frames with skipped lines are usually called fields 630a. An interlaced video camera captures consecutive fields 630a at different points of time n, n+1, etc. Unless the captured frame 610 is completely stationary, two consecutive fields 630a contain information about two different frames that cannot be combined in a straightforward manner (for instance by simple merging the fields).

The line-skipping operation does not apply any filtering before the above described downsampling in the vertical direction. Consequently, the line-skipped-sequence of fields is distorted by aliasing in the vertical direction. Aliasing is name for the effect of spectra overlapping due to subsampling of a bandlimited original signal. This effect can further lead to overt artifacts such as Moiré patterns.

The amount of aliasing in a downsampled signal depends on the signal itself and on the downsampling factor K. The higher the downsampling factor K, the larger the overlap of the signal spectrum, and the more aliasing artifacts are contained in the sequence.

In order to display a line-skipped video on a conventional progressive scan display device and in order to convert it to other formats and/or spatial resolutions, it is necessary to first reconstruct the high-resolution frames. Obviously, the resulting frame quality depends heavily on the method employed for reconstruction. The objective of reconstructing algorithms is thus to reconstruct the missing lines of the line-skipped sequence, to reduce aliasing, and to increase the vertical resolution of the frames. There is a large variety of different reconstruction algorithms known in the art, each of which has its specific advantages and disadvantages.

De-interlacing algorithms based on linear filtering reconstruct missing pixel data by applying a linear filter that has support in the set of available pixel data, i.e., by substituting missing pixel data by a weighted sum of spatially and/or temporally adjacent pixels. These algorithms are generally easy to implement, however, they are not effective for either reducing aliasing artifacts or increasing vertical resolution.

In order to prevent motion-related artifacts in the de-interlaced sequence, conventional de-interlacing algorithms employ motion compensation techniques. These algorithms typically comprise two additional steps, namely estimating object motion from a sequence of interlaced fields and compensating the motion by shifting the frame content accordingly prior to merging or interpolating consecutive fields. For de-interlacing purposes, the motion vectors have to be determined at sub-pixel resolution. The above described motion estimation algorithm (cf. Figure 4) is thus performed on up-scaled and interpolated versions of the original fields.

Obviously, the performance of this reconstruction algorithm depends heavily on the accuracy of the motion vectors. In a reconstruction algorithm, however, motion vectors have to be estimated from the aliased low-resolution sequence. Due to this aliasing, motion estimation algorithms fail to accurately estimate sub-pixel motion because a perfect match does not exist. Interpolated samples of two adjacent aliasing-distorted frames differ even if there is only translational motion without any noise and occlusion. There is only a perfect match for full-pixel shifts. These full-pixel shift motion vectors, however, are not of interest to the reconstruction algorithm because then the two sets of samples do not contain any additional information. Since motion vectors estimated from line-skipped video sequences are inherently inaccurate, motion compensation artifacts are introduced by reconstruction process significantly degrading the quality of the reconstructed video sequences.

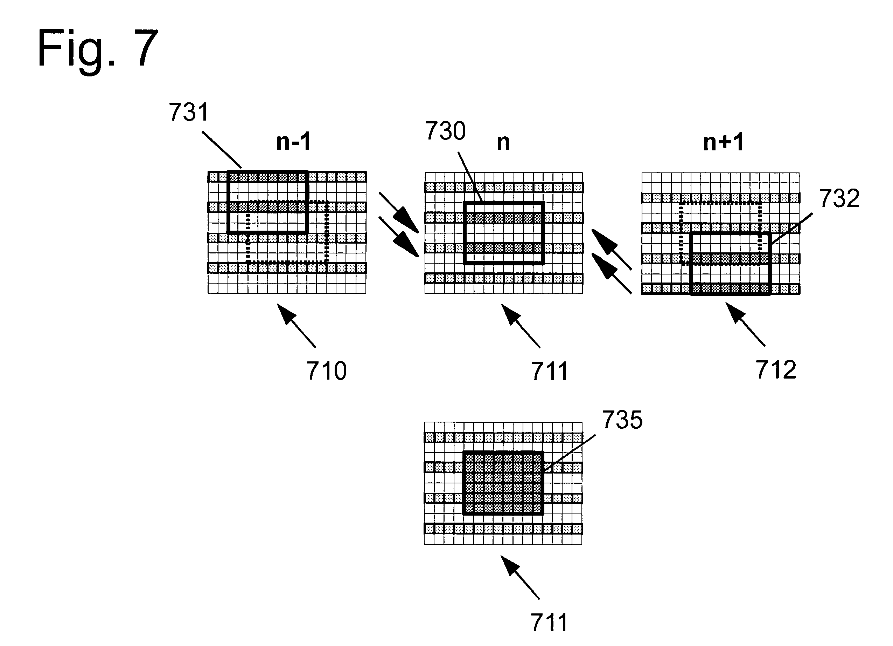

To avoid problems with exact motion estimation from low-resolution images, a block-based line mixing reconstruction algorithm is known that substitutes missing lines of a block (730) of a high-resolution grid derived from the target frame by lines from another low-resolution frame, e.g. the preceding frame. Here, the substitute lines (731, 732) are translated vertically and horizontally so as to optimize a smoothness measure computed for the thus reconstructed block. In this manner, an error-prone a priori determination of motion vectors based on interpolation of the interlaced frames in the vertical direction can be avoided. Figure 7 exemplifies the reconstruction of a block 735 of the high-resolution frame using a target frame 711 and two reference frames, the preceding frame 710 and the next frame 712, of a line-skipped sequence with K = 3.

The line mixing reconstruction algorithm is able to reconstruct vertical high frequencies of the line-skipped sequence. However, its search space (given by all combinations of coordinates and reference frames that have to be tested in order to obtain the best reconstruction) dimension, grows if more reference fields are to be considered since all combinations of the considered number of reference frames have to be tested for each target frame block. Therefore, in order to make the algorithm feasible for practical use, reduction of the search space is needed.

In accordance with an embodiment of the present invention, the search space of the line mixing algorithm can be reduced by pre-selecting the frames for reconstruction as described in any of the above examples. In particular, for a line-skipped sequence with K = 2, selecting a single best reference frame for reconstruction (cf. Figure 5) may be used.

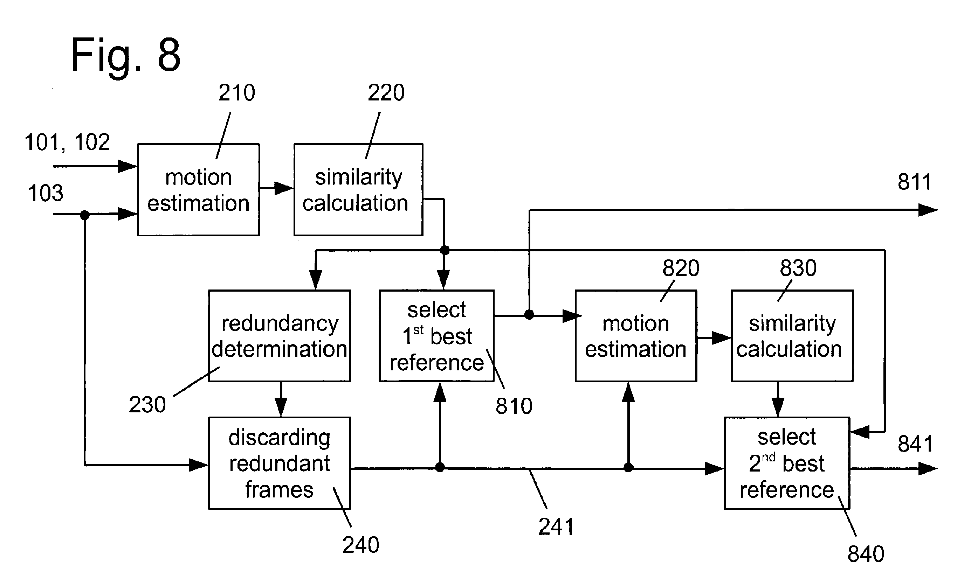

In accordance with another embodiment of the present invention two best reference frames are selected. In order to select the best combination of reference frames for the reconstruction, these frames have to be selected jointly as shown in Figure 8.

Figure 8 will be described in the following as an example of reference frame pre-selection for reconstruction of a line-skipped sequence with K = 3. Nevertheless, selection of two best reference frames may also be deployed for other types of low-resolution sequences with different subsampling factors.

In this example, the pre-selection 110 of reference frames is performed for different areas 102 (corresponding to the blocks for motion estimation) of the target frame 101 individually, the high-resolution frame 121 is then block-wise reconstructed 120 using the line mixing algorithm. Furthermore, motion estimation is performed based on the sum of absolute differences as a similarity measure, and the sum of absolute differences is equally used to quantify similarity of blocks to the target frame block when determining the redundancy and selecting the best reference frames.

First, the target frame is segmented into a plurality of blocks. The motion estimation 210 is performed by searching the best match of each target frame block 102 in each reference frame 103. The best match is found by applying a similarity measure as described in previous examples. The search for the best match is preferably performed with a sub-pixel precision only in the horizontal direction since the frame is aliasing-distorted in the vertical direction.

After performing the motion estimation, the similarity of the best match to the searched target block is directly the output of similarity calculation 220. Based on the lower and the upper threshold, the redundancy determination 230 is performed. The values of the upper and the lower threshold are preferably chosen with respect to the frame rate and/or downsampling factor and may be determined adaptively to the content of the frame sequence. From reference frames 103, the redundant ones are then discarded 240. The reduced set of reference frames is further used to determine the first and the second best reference frame jointly. The best two frames should ideally not only be dissimilar with respect to the current target frame block, but also mutually in order to maximise the amount of new information used in reconstruction.

Therefore, in 810, a first candidate reference frame is selected from the reduced set of reference frames and the block corresponding to the best match of the current target frame block is found by motion estimation 210, having the value $SAD_1$ of sum of absolute differences used as a similarity measure by 220. This block of the first candidate reference frame selected by 840 is further used by motion estimation 820, its best match in a second candidate reference frame is found, having the value $SAD_2$ of sum of absolute differences used by 830. After having obtained pairs of $SAD_1$ and $SAD_2$ for all possible combinations of first and second candidate reference frames from the set of reduced reference frames, the best combination can be chosen. The two best frames for reconstruction are, correspondingly to the example of selecting one best frame, the combination with minimal overall similarity, namely

$$max(SAD_1 + SAD_2).$$

Here, the value $SAD_2$ indicating the dissimilarity could also be limited by an upper threshold $t_{U2}$ so that only frames with $SAD_2 < t_{U2}$ are considered for the choice of the best combination. Nevertheless, the thresholding here is not as essential as in case of selection of the first best frame, since for all the reference frames in the reduced set the condition $t_L < SAD_1 < t_U$ is already satisfied, and therefore they all already contain the matching but not identical blocks to the target frame block.

The reference frames 811 and 841 with minimum overall similarity are thus chosen as the best reference frames for reconstructing a high-resolution frame from a line-skipped sequence of low resolution frames. In this way, the sub-pixel motion between the low-resolution frames can be optimally exploited for reconstruction of high frequencies in the high-resolution frame. Reconstruction performed individually for different blocks of the target frame provides local adaptability of the algorithm, able to cope with a non-uniform motion vector field.

The selection of best reference frames can be extended to number of N best reference frames. Here, N can be a predefined number, preferably N = K-1, if line-skipped sequences are considered. Extending the selection of best reference frames to N, however, results in increased complexity, since in order to find the optimum, theoretically all possible combinations of N reference frames have to be tested. The computational complexity of such search increases rapidly with increasing N.

This computational complexity may be reduced if the search is not performed for all possible combinations of the first and the second candidate reference frame. For instance, selecting two reference frames for reconstruction of a target frame area (N=2) may be performed in a cascaded way by first selecting the best reference frame, having $max(SAD_1)$ from the reduced set of non-redundant frames. In the next step, the best frame remains fixed while the remaining non-redundant reference frames are tested, i.e., the motion estimation is performed for the block in the best reference frame with the best match to the target frame block. The reference frame with the lowest similarity corresponding to $max(SAD_2)$. is then selected as the next (in this case second) best reference frame.

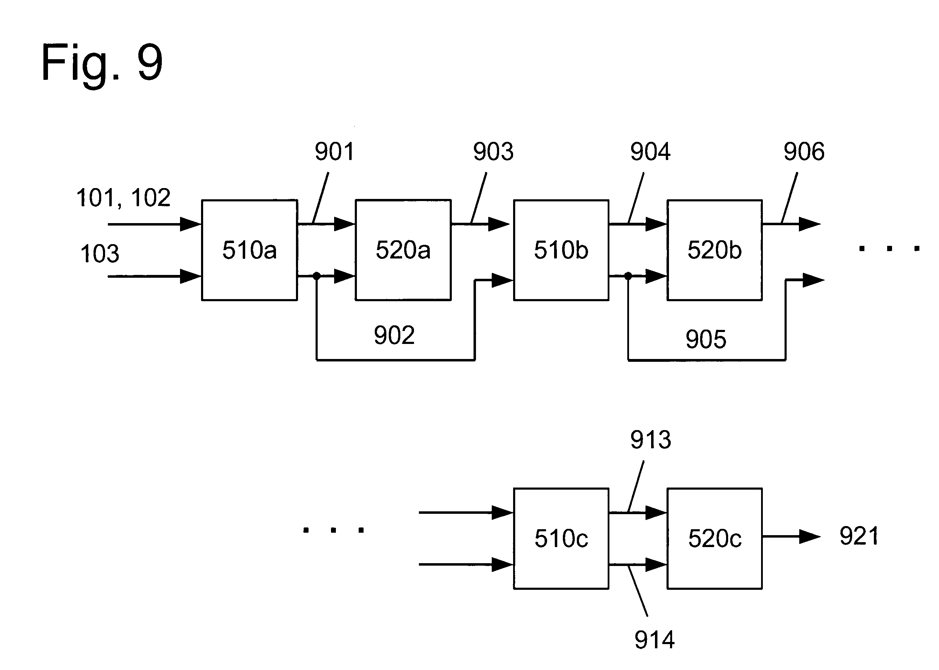

This example can be enhanced to N > 2 by cascading the search of each next best reference frame, i.e., for N = 3 by using the block from the second best reference frame for motion estimation in the remaining non-redundant reference frames, resulting in value $SAD_3$. Then as a third best reference frame, the reference frame with $max(SAD_3)$ is selected. This method can be further applied to find N-1 next best reference frames in the similar way as illustrated in an example in Figure 9.

The units 510a, 510b, and 510c has the same structure and function as unit 510. In 510a, the redundancy of reference frames 103 is tested with respect to the area 102 in the target frame 101. The redundant frames are discarded and the so reduced set of reference frames 902 together with the calculated similarity 901 between the target frame block and its best match in the reduced set of reference frames is fed into 520a where the selection of the best reference frame 903 is performed. The best reference frame 903 including its best matching block (to the target frame block) together with the reduced set of the non-redundant reference frames 902 are then input to 510b that, again, performs the motion estimation and similarity calculation. Now, the motion estimation is performed for the best matching block from the best reference frame rather than for the target frame block. The thresholding by and discarding of redundant frames may but need not to be performed. The resulting similarities 904 of the best match in all reference frames from the reduced set of frames 905 together herewith are then input into 520b where the second best reference frame 906 is selected. This process is repeated N times until the Nth best reference frame 921 is selected in 520c from the reduced set of reference frames 914, based on the similarity 913 obtained from 510c.

Another simplifications of selecting the best N reference frames are possible, even if they lead to a suboptimal set of frames for reconstruction.

Although the present invention has primarily been described as a method, this invention can likewise be embodied as an apparatus or a software product.

Summarizing, the present invention relates to the field of reconstructing a high-resolution frame from a sequence of low-resolution frames including a target frame and at least one reference frame. Here, the target frame serves as a basis for the reconstruction of the high-resolution frame and the reference frames for reconstruction are pre-selected by discarding redundant reference frames. The redundancy is determined based on motion estimation between the target frame and a reference frame. By discarding redundant reference frames, the computational complexity of the reconstruction algorithm is reduced, resulting in shortening of the computation time.

**Claims**

1. A method for reconstructing a high-resolution frame (121) from a sequence of low-resolution frames including a target frame (101) and at least one reference frame (103), comprising the step of reconstructing (120) a high-resolution frame (121) using the target frame (101) and at least one reference frame (111) for reconstruction,
   **characterized by** determining (230) whether a reference frame (103) is redundant for reconstruction of the high-resolution frame (121) based on motion estimation (210) between the target frame (101) and a reference frame (103); and discarding (240) the redundant frame from being used as a reference frame for reconstruction (111).

2. A method according to claim 1 wherein in said determining (230) step a reference frame (103) is judged to be redundant based on the similarity between the target frame (101) and the reference frame (103) taking the estimated motion into account.

3. A method according to any of claims 1 or 2 further comprising the steps of dividing the target frame (101) into a plurality of blocks, each block consisting of a plurality of pixels; and performing the motion estimation (210) for each or at least selected blocks of the target frame (101).

4. A method according to claim 3 further comprising the steps of determining similarity of said target frame blocks to the corresponding blocks in the reference frame taking the estimated motion into account, and calculating similarity (220) between the target frame (101) and the reference frame (103) based on similarities of the target frame blocks.

5. A method according to any of claims 1 to 4 wherein the redundancy determining (230) and discarding (240) steps are performed only once per reference frame (101).

6. A method according to any of claims 1 to 4 wherein the target frame (101) is divided into a plurality of target frame areas (102), and the reconstructing step (120) is performed for different target frame areas (102) individually.

7. A method according to claim 6 wherein the determining (230) and discarding (240) steps are performed individually for different target frame areas (102).

8. A method according to any of claims 6 or 7 wherein the target frame areas (102) are the blocks (102c) used for motion estimation (210).

9. A method according to any of claims 2 to 8 wherein a reference frame (103) is judged redundant in said determining step (230) if similarity (221) is higher than a predefined threshold ($T_L$).

10. A method according to any of claims 2 to 9 wherein a reference frame (103) is prevented from being used as a reference frame (111) for reconstruction if similarity (221) is lower than a predefined threshold ($T_U$).

11. A method according to any of claims 2 to 10 further comprising the step of selecting (520) a best reference frame (521) for reconstruction from the reference frames (241) that have not been determined redundant, the best reference frame (521) having the lowest similarity (221) to the target frame (101).

12. A method according to claim 11 further comprising the step of selecting a next best reference frame (906, 921) for reconstruction from the reference frames (241) that have not been determined redundant, and that have not been selected best reference frame (903) or next best reference frame (906), said next best reference frame (906, 921) having the lowest similarity (904, 913) to the best reference frame (903) or to previously selected next best reference frame (906).

13. A method according to any of claims 1 to 12 comprising the step of selecting N reference frames (111) for reconstruction from the reference frames (241) that have not been determined redundant.

14. A method according to claim 13 wherein the selected N reference frames (111) are N best reference frames, the N best reference frames having the lowest similarity to the target frame (221) and to each other (830).

**15.** A method according to any of claims 13 or 14 wherein N is a predefined integer value larger than 1.

**16.** A method according to claim 15 wherein N equals 2.

**17.** A method according to any of claims 1 to 16 wherein the motion estimation (210) is performed with a sub-pixel precision.

**18.** A method according to claim 17 wherein the sub-pixel precision is only applied in the direction where no aliasing exists.

**19.** A method according to any of claims 1 to 18 wherein the sequence of low-resolution frames (101, 103) is a line-skipped sequence of fields (630a, 630b) wherein each field of the line-skipped sequence of fields has a vertical resolution that is K-fold lower than the vertical resolution of the full-resolution frames (610), K is an integer larger than 1.

**20.** A method according to claim 19 wherein K equals 2 and the line-skipped sequence of fields (630a) represents an interlaced video signal.

**21.** A method according to claim 19 wherein K is an integer larger than 2, in particular equal to 3 (630b).

**22.** A method according to any of claims 19 to 21 wherein N=K-1, N being the number of frames (111) selected for reconstruction (120).

**23.** A computer program product comprising a computer readable medium having computer readable program code embodied thereon, the program code being adapted to carry out all steps of any of claims 1 to 22.

**24.** An apparatus for reconstructing a high-resolution frame (121) from a sequence of low-resolution frames including a target frame (101) and at least one reference frame (103), said apparatus comprising:

a processing unit (120) adapted for reconstructing a high-resolution frame (121) using the target frame (101) and at least one reference frame (103),

**characterized by** a judging unit (230) for determining whether a reference frame (103) is redundant for reconstruction of the high-resolution frame (121) based on motion estimation (210) between the target frame (102) and a reference frame (103); and a disabling unit (240) for discarding the redundant frame from being used by processing unit (120) as a reference frame (111) for reconstruction.

**25.** An apparatus according to claim 24 wherein said judging unit (230) judges a reference frame (103) to be redundant based on the similarity between the target frame (101) and the reference frame (103) taking the estimated motion into account.

**26.** An apparatus according to any of claims 24 or 25 wherein the target frame (101) is subdivided into a plurality of blocks, each block consisting of a plurality of pixels; and the motion estimation (210) is performed for each or at least selected blocks of the target frame (101).

**27.** An apparatus according to claim 26 wherein the similarity of said target frame blocks to the corresponding blocks in the reference frame is determined taking the estimated motion into account, and said apparatus further comprises a similarity calculation unit (220) for calculating the similarity between the target frame (101) and the reference frame (103) based on similarities of the target frame blocks.

**28.** An apparatus according to any of claims 24 to 27 wherein the judging unit (230) is adapted to determine the redundant frame only once per reference frame (101).

**29.** An apparatus according to claims 24 to 27 wherein the target frame (101) is divided into a plurality of target frame areas (102), and the processing unit (120) is adapted to reconstruct different target frame areas individually.

**30.** An apparatus according to claim 29 wherein the judging unit (230) is adapted to determine the redundant frame for different target frame areas (102) individually.

**31.** An apparatus according to any of claims 29 or 30 wherein the target frame areas (102) are the blocks (102c) used by motion estimation (210).

**32.** An apparatus according to claim 25 to 31 wherein the judging unit (230) is adapted to determine a reference frame (103) redundant if similarity (221) is higher than a predefined threshold ($T_L$).

**33.** An apparatus according to claims 25 to 32 wherein the judging unit (230) is adapted to prevent a reference frame (103) from being used as a reference frame (111) for reconstruction if similarity (221) is lower than a predefined threshold ($T_U$).

**34.** An apparatus according to any of claims 25 to 33 further comprising a selector (520) for selecting a best reference frame (521) for reconstruction from the reference frames (241) that have not been determined redundant, the best reference frame (521) having the lowest similarity (221) to the target frame (101).

35. An apparatus according to claim 34 further comprising a selector (520a, 520b, 520c) for selecting a next best reference frame (906, 921) for reconstruction from the reference frames (241) that have not been determined redundant, and that have not been selected best reference frame (903) or next best reference frame (906), said next best reference frame (906, 921) having the lowest similarity (904, 913) to the best reference frame (903) or to previously selected next best reference frame (906).

36. A method according to any of claims 24 to 35 further comprising a selector for selecting N reference frames (111) for reconstruction from the reference frames (241) that have not been determined redundant.

37. An apparatus according to claim 36 wherein the selected N reference frames (111) are N best reference frames, the N best reference frames having the lowest similarity to the target frame (221) and to each other (830).

38. An apparatus according to any of claims 36 or 37 wherein N is a predefined integer value larger than 1.

39. An apparatus according to claim 38 wherein N equals 2.

40. An apparatus according to any of claims 24 to 39 wherein the motion estimation (210) is performed with a sub-pixel precision.

41. An apparatus according to claim 40 wherein the sub-pixel precision is only applied in the direction where no aliasing exists.

42. An apparatus according to claims 24 to 41 wherein the sequence of low-resolution frames (101, 103) is a line-skipped sequence of fields (630a, 630b) wherein each field of the line-skipped sequence of fields has a vertical resolution that is K-fold lower than the vertical resolution of the full-resolution frames (610), K is an integer larger than 1.

43. An apparatus according to claim 42 wherein K equals 2 and the line-skipped sequence of fields (630a) represents an interlaced video signal.

44. An apparatus according to claim 42 wherein K is an integer larger than 2, in particular equal to 3 (630b).

45. An apparatus according to any of claims 42 to 44 wherein N=K-1, N being the number of frames (111) selected for reconstruction (120).

# Fig. 1

# Fig. 2

EP 2 105 881 A1

# Fig. 3a

301       310

# Fig. 3b

102a      310

102b

102c

EP 2 105 881 A1

# Fig. 4

# Fig. 5

EP 2 105 881 A1

# Fig. 6a

n     n+1     n+2     n+3

610

620a

630a

# Fig. 6b

n     n+1     n+2     n+3

610

620b

630b

EP 2 105 881 A1

# Fig. 7

# Fig. 8

EP 2 105 881 A1

# Fig. 9

**European Patent Office**

**EUROPEAN SEARCH REPORT**

Application Number

EP 08 00 5483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QINGZHONG PENG ET AL: "A Fast Print-from-Video Technique for Cell-Phone Cameras" IEEE TRANSACTIONS ON CONSUMER ELECTRONICS, IEEE SERVICE CENTER, NEW YORK, NY, US, vol. 53, no. 4, 1 November 2007 (2007-11-01), pages 1237-1246, XP011199887 ISSN: 0098-3063 * abstract * * page 1238 - page 1239 * * page 1241 - page 1242 * * figures 2,3,11 * ----- | 1-45 | INV. G06T5/50 G06T7/20 |
| Y | A. ZANDIFAR, R. DURAISWAMI, L.S. DAVIS: "A video-based framework for the analysis of presentations/posters" IJDAR, vol. 7, no. 2, 2005, pages 178-187, XP002493695 * page 179, column 2, line 6 - line 15 * * page 180 * ----- | 1-45 | |
| Y | T.F. GEE, T.P. KARNOWSKI, K.W. TOBIN: "Multiframe combination and blur deconvolution of video data" PROCEEDINGS SPIE, vol. 3974, 2000, pages 788-795, XP002492701 * abstract * sections 3, 4 ----- | 10,33 | TECHNICAL FIELDS SEARCHED (IPC) G06T |
| A | GB 2 301 972 A (SONY UK LTD [GB]) 18 December 1996 (1996-12-18) * page 8 - page 10 * ----- -/-- | 18,41 | |

The present search report has been drawn up for all claims

| Place of search | Date of completion of the search | Examiner |
|---|---|---|
| Munich | 9 September 2008 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 08 00 5483

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JING LI ET AL: "Automated Feature Points Management for Video Mosaic Construction" INFORMATION TECHNOLOGY AND APPLICATIONS, 2005. ICITA 2005. THIRD INTER NATIONAL CONFERENCE ON SYDNEY, AUSTRALIA 04-07 JULY 2005, PISCATAWAY, NJ, USA,IEEE, vol. 1, 4 July 2005 (2005-07-04), pages 760-763, XP010821173 ISBN: 978-0-7695-2316-3 * page 761 * | 1-45 | |
| A | US 6 331 874 B1 (DE GARRIDO DIEGO P [US] ET AL) 18 December 2001 (2001-12-18) * the whole document * | 19-21, 42-44 | |
| A | US 2006/034533 A1 (BATCHVAROV ANDREY B [US]) 16 February 2006 (2006-02-16) * the whole document * | 1-45 | |
| A | WENYI ZHAO: "Super-resolving compressed video with large artifacts" PATTERN RECOGNITION, 2004. ICPR 2004. PROCEEDINGS OF THE 17TH INTERNAT IONAL CONFERENCE ON CAMBRIDGE, UK AUG. 23-26, 2004, PISCATAWAY, NJ, USA,IEEE, vol. 1, 23 August 2004 (2004-08-23), pages 516-519, XP010724315 ISBN: 978-0-7695-2128-2 * the whole document * | 1-45 | TECHNICAL FIELDS SEARCHED (IPC) |

The present search report has been drawn up for all claims

| Place of search | Date of completion of the search | Examiner |
|---|---|---|
| Munich | 9 September 2008 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                             
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 08 00 5483

This annex lists the patent family members relating to the patent documents cited in the above-mentioned European search report.
The members are as contained in the European Patent Office EDP file on
The European Patent Office is in no way liable for these particulars which are merely given for the purpose of information.

09-09-2008

| Patent document cited in search report | | Publication date | Patent family member(s) | | Publication date |
|---|---|---|---|---|---|
| GB 2301972 | A | 18-12-1996 | JP | 3799099 B2 | 19-07-2006 |
| | | | JP | 8336161 A | 17-12-1996 |
| | | | US | 5659365 A | 19-08-1997 |
| US 6331874 | B1 | 18-12-2001 | US | 6512550 B1 | 28-01-2003 |
| US 2006034533 | A1 | 16-02-2006 | NONE | | |

EPO FORM P0459

For more details about this annex : see Official Journal of the European Patent Office, No. 12/82